# NEW EUROPEAN PATENT SPECIFICATION

(11) **EP 0 634 097 B2**
(45) Date of publication and mention of the opposition decision: **17.07.2002**
(45) Mention of the grant of the patent: 23.06.1999
(21) Application number: 94201999.3
(22) Date of filing: 11.07.1994
(51) Int. Cl.: A01K 1/12, A01J 7/00

(54) **A construction for automatically milking animals**
Gerät zum automatischen Melken von Tieren
Dispositif de traite automatique d'animaux

(30) Priority: 12.07.1993 NL 9301214
(43) Date of publication of application: 18.01.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 188 303
- EP-A- 0 191 517
- EP-A- 0 332 230
- NL-A- 8 602 505
- SE-B- 453 955
- US-A- 3 246 631
- US-A- 3 460 515
- US-A- 3 536 045
- US-A- 3 792 686
- US-A- 3 805 742
- US-A- 4 000 718
- US-A- 4 715 322
- US-A- 4 763 605

## Description

The present invention relates to a construction for automatically milking animals, such as cows, according to the preamble of claim 1.

Such a construction is known from NL-A-8602505. In this known construction the animals are firstly submitted to a cleaning operation, then to a milk sampling operation and finally to a milking operation by means of a milking robot.

The disadvantage of the above-mentioned construction is that sometimes the animals do not feel comfortable during stay in the boxes.

The invention has for its object to provide a construction as described above, in which the animals feel comfortable and in which it is possible to treat the animals in the different boxes in the most efficient way.

According to the invention this is achieved by the features of the characterising part of claim 1. It may happen that animals present in a box other than the milk box are still denied access to the milk box. According to the invention it is then possible for the animals to leave the said first boxes without passing through the milk box.

From document EP-A-0 188 303 there is known a construction with a first box in which the udder of the animal is cleaned and a second box in which the animal is automatically milked by means of a milking robot. In the milking box there is arranged a feed trough in which, during milking, feed is supplied to the animal. Especially with high productive animals the milking time is sometimes not long enough for the animal to eat all the feed in the feed trough. With the construction according to the invention, as already explained above, the feeding time is independent of the milking time, as the animal can also eat in the other boxes.

According to the invention, the boxes can therefore be disposed such that the animals can pass therethrough in one direction only, whilst of the consecutive boxes through which the animals are to pass, the milk box will usually be the last one. In order to render possible a full capacity utilization of the milk box, which as regards cost price is so much more expensive, any treatment of an animal in each of the boxes through which the animal is to pass first will be of a shorter duration than the treatment of this animal in the milk box.

According to the invention, in a practical embodiment the boxes are aligned in the longitudinal direction. The boxes which are contiguous to each other in the longitudinal direction, can be put in connection with each other by means of upwardly movable partitions. More in particular, the entrance of the first box an animal has to pass through and the exit of the last box to be passed through by an animal are positioned at the short sides of the boxes, whilst both the entrance and the exit are formed by an upwardly movable partition. These feed troughs are preferably attached to one or more upwardly movable partitions between individual boxes and/or to an exit, constituted by the upwardly movable partition, of the box through which the animal is to pass last. When three boxes are present, three feed troughs can be attached to the partition between the boxes and to the exit of the box through which an animal is to pass last.

The partitions between the boxes cannot only be used for accommodating feed troughs, but they can also be utilized for the positioning of an animal in the box. According to the invention, for this purpose the partition between the boxes and the partition which constitutes the entrance of the first box through which an animal has passed can have means attached thereto, for moving the animal to a more defined position in the lengthwise direction of the boxes.

In order to allow easy passage through aligned boxes, the partitions, as has been mentioned in the foregoing, must be provided such that they are upwardly movable. According to the invention, such an upwardly movable partition is preferably provided with a four-bar linkage, so that at least the relevant feed trough can be moved upwardly without any worthwhile change in its position.

For a better understanding of the invention and to show how the same may be carried into effect, reference will now be made, by way of example, to an embodiment shown in the accompanying drawings, in which:
Figure 1 illustrates a construction for automatically milking animals, comprising three boxes;
Figure 2 is a plan view of the milk box forming part of the construction, and
Figure 3 is a side view of the milk box shown in Figure 2.

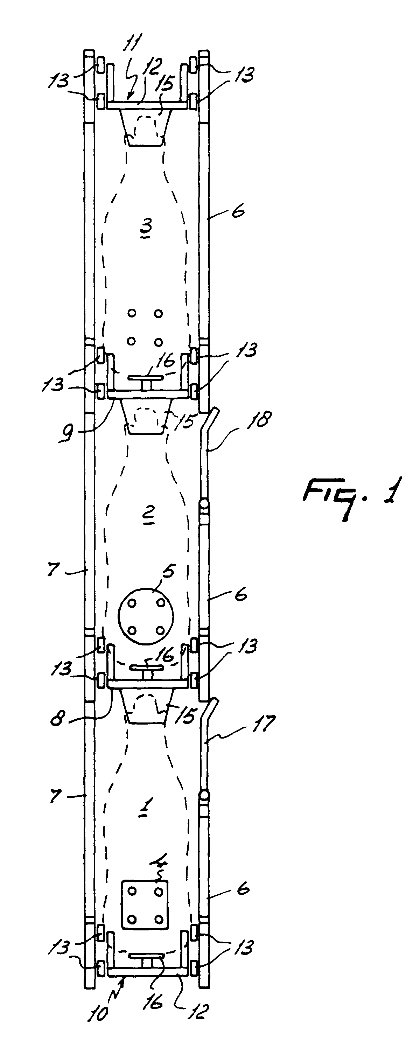

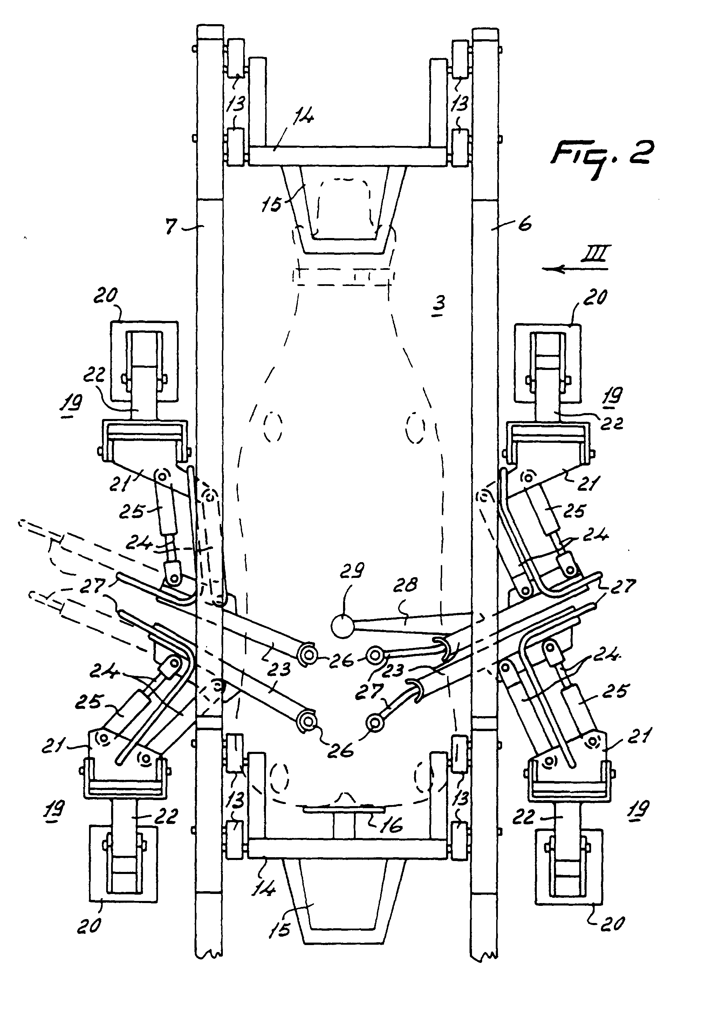

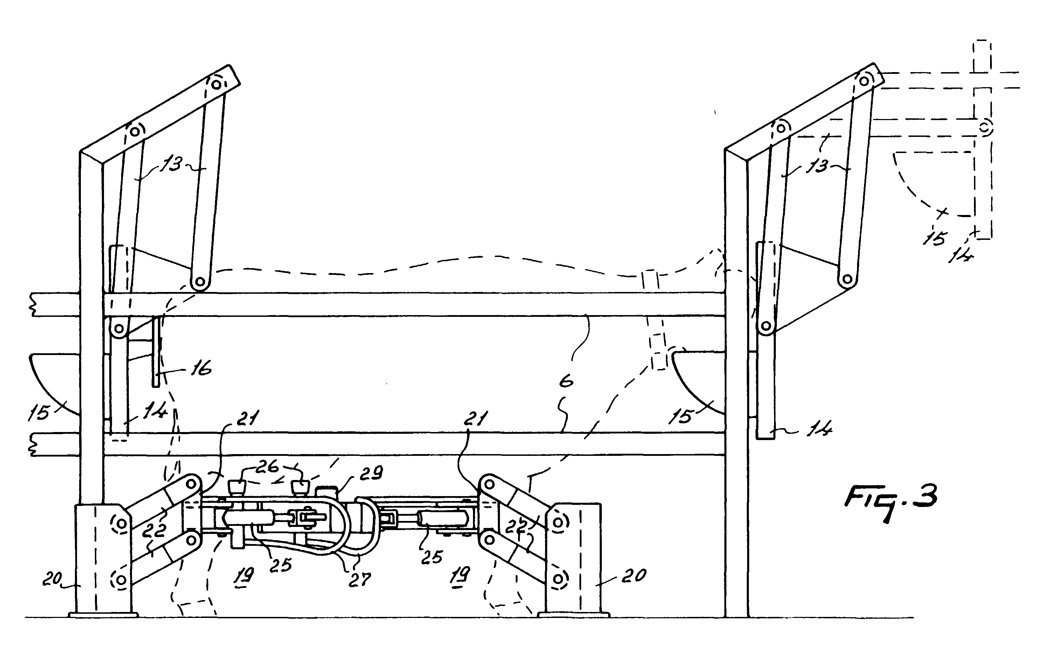

The construction shown in Figure 1 comprises three boxes 1, 2 and 3, which are aligned in the longitudinal direction, more specifically in such a manner that the animals can pass through these boxes in one direction only. The three boxes to be passed through by the animals are equipped, in this sequence, for cleaning the udder and more in particular the teats of the animals to be milked, massaging of the udder of the animals to be milked and milking the animals. For that purpose, cleaning means 4 are shown schematically in box 1, whilst means 5 for massaging an udder are shown schematically in box 2. The means contained in box 3 for milking, more particularly automatically milking animals, are shown in Figures 2 and 3.

Since the box which is to be passed through last, i.e. the milk box 3, is equipped with a relatively expensive construction for automatically milking animals, an optimum capacity utilization of the milk box 3 is important. Therefore, the period of time the animals remain in the boxes 1 and 2 should never exceed the period of time the animals are in the milk box 3 for being milked. This means that the time required for cleaning the animals and the time required for massaging the animals must at all times be shorter than the time required for milking.

The boxes 1, 2 and 3 are designed such that their longitudinal sides 6 and 7 form an integral whole. In a concrete embodiment, the longitudinal sides are formed by a continuous railing. The boxes 1, 2 and 3 which are connected up with each other in the lengthwise direction can be put into connection with each other by means of upwardly movable partitions 8 and 9. In addition, the box 1 is further provided with an entrance 10, while the milk box 3 is further provided with an exit 11. The entrance 10 of the box 1 through which an animal passes first and the exit 11 of the box 3 through which an animal passes last, are disposed at the short sides of the boxes 1 and 3, whilst both the entrance and the exit are constituted by an upwardly movable partition 12. So as to allow the animals to pass from one box to the other, it must be possible to hinge the partitions 8 and 9 upwardly in such a manner that the animals can pass therebelow from one box to the other. For that purpose, the upwardly movable partitions 8 and 9 are fitted with a four-bar linkage 13, with the aid of which a plate or frame 14 which constitutes the partition can be moved obliquely forwardly and upwardly. Preferably, the entrance 10 and exit 11, respectively, are designed in a similar manner as the partitions 8 and 9, that is to say that also the upwardly movable partitions 12 include a four-bar linkage construction 13 having a plate or frame 14, so that after the plate or frame 14 has been pivoted upwardly the entrance to the box 1 and the exit from the box 3, respectively, are released.

A feed trough 15 may be attached to each of the plates or frames 14 of the partitions 8, 9 and 12. When the plate or frame 14 is pivoted upwardly, the relevant feed trough does substantially not change its position, so that, should any fodder stay behind in the feed trough, these residues will not drop therefrom during the upward pivotal motion of the relevant partition. In addition, the plate or frame 14 of the partitions 12, 8 and 9 may be provided with means for moving the animal present in the relevant box to a more defined position, which is of importance with a view to applying the udder cleaning means in box 1 or applying the udder massaging means in box 2 or for the application of the teat cups for automatically milking the animal in box 3. So as to render it possible for animals, which entered the box 1 or the box 2 but to which thereafter access to the box 3 must be denied, to be lead in an easy manner from the boxes 1 and 2, the railing is provided at the longitudinal side 6 with respective exits 17 and 18.

After an animal has been cleaned in box 1 and has been subjected to massage in box 2 and thereafter has been guided to box 3, the animal proceeds that far in box 3 until its head arrives at the relevant feed trough 15. The partition 9 is then moved downwards until the relevant positioning means 16 contact the hind side of the animal, whereby the position of the animal in the longitudinal direction has predominantly been determined. By restricting the distance between the two railings forming the longitudinal sides 6 and 7, also the position in the transverse direction of the animal has predominantly been determined. In combination with the animal identification data, this also roughly determines the position of the teats of an animal's udder, so that a milking cluster can be passed to under the animal and, after the position of the teats has been accurately determined with the aid of a special sensor, the teat cups of the milking cluster can be connected and the animal can be milked automatically. During the time in which the animal is milked, a subsequent animal, which has already been cleaned at an earlier instant, can be allowed to enter the box 2 to be subjected there to a massage treatment. The animal will again advance that far into box 2 until its head arrives at the relevant feed trough 15, whereafter the partition 8 is moved downwards, more particularly until the relevant positioning means 16 contact the hind side of the animal. Thereafter the cow entering the box 1 can advance that far until also the head of this animal arrives at the feed trough 15 attached to said last partition 12, whereafter the entrance of box 1 closes until the positioning means 16, attached to the entrance of the milk box 1, are in contact with the hind side of the animal. As also in the boxes 1 and 2 the position of the udder relative to the boxes is predominantly determined by the positioning of the animal, the cleaning and massaging means can easily be moved in the proper manner to under the animal.

The milk box 3 is shown in greater detail in Figures 2 and 3. In these drawings, the construction for automatically milking animals is assembled from four robot arm constructions 19 which operate independently of each other. The four robot arm constructions 9 are disposed near the box walls, that is to say near the longitudinal sides 6 and 7 of the milk box 3, more specifically on the exterior side of the milk box 3. The robot arm constructions arranged further to the rear on either side of the milk box and the robot arm constructions disposed in a more advanced position on either side of the milk box are arranged such that they face each other in a two-by-two relationship. Each of the robot arm constructions 9 comprises a frame portion 20 which is mounted in a fixed position outside the milk box and a supporting element 21 which is movable in height with respect to the fixed frame portion 20 with the aid of a four-bar linkage 22. The supporting element 21 extends in a substantially horizontal plane and remains in this substantially horizontal position during the up and down motion by means of the four-bar linkage 22. In addition, the robot arm construction 19 includes a straight carrier 23 which is connected to a supporting element 21 with the aid of a four-bar linkage 24. The four-bar linkage 24 is then active in a predominantly horizontal plane. As one of the arms, i.e. the arm 25 of the four-bar linkage 24, is adjustable in length the carrier 23 can move in two coordinates in a horizontal plane.

The up-and-down motion of the carrier 23 by means of the four-bar linkage 22, as well as the pivotal motion of the carrier 23 in a substantially horizontal plane by means of the four-bar linkage 24, are effected with the aid of pneumatic operating cylinders, which are not further shown in the drawings. Also the longitudinally adjustable arm 25 of the four-bar linkage 24 can be constituted by a pneumatic operating cylinder. In the rest condition, the position of the two four-bar linkages 22 and 24, as well as the length of the arm 25 are such that the carrier 23 is in a position substantially completely outside the milk box 3. In Figure 2 this position of the carrier 23 for two robot arm constructions 19 is shown by means of broken lines. In this position, the carrier 23 extends to the rear towards the milk box, which facilitates moving the carrier between a front leg and a hind leg of an animal in a direction to under the udder. Since the robot arm constructions 19 which are disposed near each of the longitudinal sides of the milk box face each other, the carriers 23 of these robot arm constructions 19 can extend in a somewhat parallel direction and the carriers can simultaneously be moved, without hitting each other, in such a manner that each end can be moved to under a relevant teat of an animal to be milked. At the end of each carrier 23 there is a teat cup 26, to which is connected a milk tube 27, which extends in the longitudinal direction of the carrier 23, either passing through the carrier 23, or parallel to the carrier 23, which milk tube 27 extends in the form of a loop at the other end of the carrier 23 and from there is passed along the four-bar linkage 24 to the supporting element 21 and further to the milk collecting unit in the milking plant. The teat cups 26 may be connected via this milk tube to the relevant carrier 23, although it is alternatively possible to provide an additional, flexible element to provide a connection between a teat cup 26 and a carrier 23. In the carrier 23, or parallel thereto, there can be present an operating cylinder which acts either on the milk tube 27 or on the said flexible element for pulling the teat cup 26 against a carrier 23 or keeping it right up against it. After a carrier 23, at whose end a teat cup 26 is disposed, has been moved to under a teat to which the teat cup 26 is to be connected, then, once the teat cup has been connected, the carrier 23 can be moved back, so that the teat cup 26 remains connected to the carrier 23 only via the milk tube 27 or via the said flexible connection. This has the advantage that, should the animal move slightly, the teat cup 26 can easily follow the motions of the animal because of its flexible coupling to the carrier 23. When the milking operation has ended and the vacuum in the teat cup 26 falls off, then by activating immediately thereafter or simultaneously therewith the operating cylinder which acts on the milk tube or on the flexible connection, the teat cup 26 can be retracted against the seat at the end of the carrier 23. Figure 2 illustrates the position of the carrier 23 of the two robot arm constructions located in the drawing outside the longitudinal side 7 in the position, in which the teat cups bearing on the carriers have been moved to under the teats of the animal to be connected in this position, whilst the carriers of the robot arm constructions at the outer side of the longitudinal side 6 are shown in a position, in which the teat cups 26 are in the connected state and the carriers 23 in the retracted state, so that a flexible connection of the teat cups to the robot arm constructions has been accomplished. At one of the carriers 23 there is shown a supporting element 28 for a sensor 29, more in particular a laser sensor, with the aid of which laser sensor an accurate determination of the position of the teats with respect to the robot arm constructions, and consequently with respect to the milk box, is possible. Such an accurate positional determination is highly desirable to enable a reliable connection of the teat cups to the teats.

Furthermore, the invention is not limited to the embodiment shown in the drawings, but also relates to all kinds of modifications, in so far as they are within the scope of the accompanying claims.

## Claims

1. A construction for automatically milking animals, such as cows, comprising a milk box (3) with a milking robot, while the construction includes at least two further boxes (1, 2), said boxes (1 to 3) being disposed and arranged such that the animals in the boxes (1 to 3) can be subjected to consecutive different treatments, the boxes (1 to 3) being equipped, in this sequence, for cleaning, massaging and milking of the animals, the boxes (1 to 3) being arranged one after the other, the arrangement being such that each animal which passes a box (1, 2) previous to the milk box (3) will pass the milk box (3) or is given the possibility to leave said box (1, 2) previous to the milk box (3) without passing through the milk box (3), **characterized in that** said boxes (1, 2, 3) each include a feed trough and **in that** the boxes (1, 2), in which cleaning and massaging can be performed, are provided with an exit (17, 18) for the animals, located in the side wall of these boxes (1, 2).

2. A construction as claimed in claim 1, **characterized in that**, the boxes (1 to 3) are disposed such that the animals can pass therethrough in one direction only.

3. A construction as claimed in claim 1 or 2, **characterized in that** of the consecutive boxes (1 to 3) through which the animals are to pass, the milk box (3) is the last one.

4. A construction as claimed in claim 3, **characterized in that** any treatment of an animal in each of the boxes (1 to 3) through which the animal is to pass first is of a shorter duration than the treatment of this animal in the milk box (3).

5. A construction as claimed in any one of the preceding claims, **characterized in that** all the boxes (1 to 3) are aligned in the longitudinal direction.

6. A construction as claimed in claim 5, **characterized in that** it comprises three boxes (1 to 3) which are contiguous to each other in the longitudinal direction and can be put into connection with each other by means of upwardly movable partitions (8, 9).

7. A construction as claimed in claim 6, **characterized in that** the entrance (10) of the box (1) through which an animal is to pass first and the exit (11) of the box (3) through which an animal is to pass last are positioned at the short sides of the boxes (1, 3), while both the entrance (10) and the exit (11) are constituted by an upwardly movable partition (12).

8. A construction as claimed in any one of the preceding claims, **characterized in that** the feed troughs (15) are attached to one or more upwardly movable partitions (18, 9) between individual boxes (1, 2; 2, 3) and/or to the exit (11), constituted by an upwardly movable partition (12), of the box (3) through which an animal is to pass last.

9. A construction as claimed in any one of claims 6 to 8, **characterized in that** there are present three boxes (1 to 3) and three feed troughs (15), attached to the partition (18, 9) between the boxes (1, 2; 2, 3) and to the exit (11) of the box (3) through which an animal is to pass last.

10. A construction as claimed in any one of claims 6 to 9, **characterized in that** the partition (18, 9) between the boxes (1, 2; 2, 3) and the partition (12) constituting the entrance (10) of the box (1) through which an animal has to pass first, have means (16) attached thereto for moving the animal to a more defined position in the longitudinal direction of the boxes (1 to 3).

11. A construction as claimed in any one of claims 6 to 10, **characterized in that**, an upwardly movable partition (8, 9, 12) is equipped with a four-bar linkage (13) for moving at least the relevant feed trough (15) upwardly without any worthwhile change in its position.

## Patentansprüche

1. Vorrichtung zum automatischen Melken von Tieren, wie z. B. Kühen, mit einer Melkbox (3) und einem Melkroboter, wobei die Vorrichtung mindestens zwei weitere Boxen (1, 2) aufweist, wobei die Boxen (1 bis 3) derart verteilt und angeordnet sind, daß die Tiere in den Boxen (1 bis 3) aufeinanderfolgenden unterschiedlichen Behandlungen unterzogen werden können, wobei die Boxen (1 bis 3) Einrichtungen aufweisen, um die Tiere nacheinander zu reinigen, zu massieren und zu melken, wobei die Boxen (1 bis 3) hintereinander angeordnet sind, wobei die Anordnung so getroffen ist, daß jedes Tier, das eine Box (1, 2) vor der Melkbox (3) durchläuft, die Melkbox (3) durchläuft oder die Gelegenheit erhält, die Box (1, 2) vor der Melkbox (3) zu verlassen, ohne die Melkbox (3) zu durchlaufen,
**dadurch gekennzeichnet, daß** die Boxen (1, 2) jeweils einen Futtertrog enthalten, und daß die Boxen (1, 2), in denen die Reinigung und die Massage durchgeführt werden können, mit einem Ausgang (17, 18) für die Tiere versehen sind, der in der Seitenwand dieser Boxen (1, 2) angeordnet ist.

2. Vorrichtung nach Anspruch 1,
**dadurch gekennzeichnet, daß** die Boxen (1 bis 3) derart angeordnet sind, daß sie von den Tieren nur in einer Richtung zu durchlaufen sind.

3. Vorrichtung nach Anspruch 1 oder 2,
**dadurch gekennzeichnet, daß** von den aufeinanderfolgenden Boxen (1 bis 3), die die Tiere durchlaufen müssen, die Melkbox (3) die letzte ist.

4. Vorrichtung nach Anspruch 3,
**dadurch gekennzeichnet, daß** jede Behandlung eines Tieres in jeder der Boxen (1 bis 3), die das Tier zuerst durchlaufen muß, von kürzerer Dauer ist als die Behandlung dieses Tieres in der Melkbox (3).

5. Vorrichtung nach einem der vorhergehenden Ansprüche, **dadurch gekennzeichnet, daß** alle Boxen (1 bis 3) in Längsrichtung ausgerichtet sind.

6. Vorrichtung nach Anspruch 5,
**dadurch gekennzeichnet, daß** die Vorrichtung drei Boxen (1 bis 3) aufweist, die in Längsrichtung aneinander angrenzen und mittels aufwärts bewegbarer Trennwände (8, 9) miteinander zu verbinden sind.

7. Vorrichtung nach Anspruch 6,
**dadurch gekennzeichnet, daß** der von einem Tier zuerst zu passierende Eingang (10) der Box (1) und der von einem Tier zuletzt zu passierende Ausgang (11) der Box (3) an den Schmalseiten der Boxen (1, 3) angeordnet sind, wobei sowohl der Eingang (10) als auch der Ausgang (11) durch eine aufwärts bewegbare Trennwand (12) gebildet sind.

8. Vorrichtung nach einem der vorhergehenden Ansprüche, **dadurch gekennzeichnet, daß** die Futtertröge (15) an einer oder an mehreren aufwärts bewegbaren Trennwänden (8, 9) zwischen einzelnen Boxen (1, 2; 2, 3) und/oder an dem von einem Tier zuletzt zu passierenden Ausgang (11) der Box (3) angebracht sind, der durch eine aufwärts bewegbare Trennwand (12) gebildet ist.

9. Vorrichtung nach einem der Ansprüche 6 bis 8,
**dadurch gekennzeichnet, daß** drei Boxen (1 bis 3) und drei Futtertröge (15) vorhanden sind, die an der Trennwand (8, 9) zwischen den Boxen (1, 2; 2, 3) und an dem von einem Tier zuletzt zu passierenden Ausgang (11) der Box (3) angebracht sind.

10. Vorrichtung nach einem der Ansprüche 6 bis 9,
**dadurch gekennzeichnet, daß** an der Trennwand (8, 9) zwischen den Boxen (1, 2; 2, 3) und an der Trennwand (12), die den von einem Tier zuerst zu passierenden Eingang (10) der Box (1) bildet, eine Vorrichtung (16) angebracht ist, um das Tier in eine genauer definierte Position in Längsrichtung der Boxen (1 bis 3) zu bewegen.

11. Vorrichtung nach einem der Ansprüche 6 bis 10,
**dadurch gekennzeichnet, daß** eine aufwärts bewegbare Trennwand (8, 9, 12) ein Gelenkviereck (13) aufweist, um zumindest den zugehörigen Futtertrog (15) ohne wesentliche Änderung seiner Lage nach oben zu bewegen.

## Revendications

1. Dispositif de traite automatique d'animaux, tels que des vaches, comprenant une stalle de traite (3) avec un robot trayeur, tandis que le dispositif comporte au moins deux autres stalles (1, 2), les stalles (1 à 3) étant disposées et aménagées de telle sorte que les animaux dans les stalles (1 à 3) peuvent être soumis à des traitements différents consécutifs, les stalles (1à 3) étant équipées, dans cette séquence pour nettoyer, masser et traire les animaux, les stalles (1 à 3) étant disposées l'une après l'autre, la disposition étant telle que chaque animal qui passe par une stalle (1, 2) avant la stalle de traite (3) passera par la stalle de traite (3) ou a la possibilité de quitter ladite stalle (1, 2) avant la stalle de traite (3) sans passer par la stalle de traite (3) **caractérisé par le fait que** lesdites stalles (1, 2, 3) comportent chacune une mangeoire et en ce que les stalles (1, 2), dans lesquelles le nettoyage et le massage peuvent être effectués, sont pourvues d'une sortie (17, 18) pour l'animal, située dans la paroi latérale de ces stalles (1, 2).

2. Dispositif selon la revendication 1, **caractérisé en ce que** les stalles (1 à 3) sont disposées de telle sorte que les animaux peuvent les traverser dans un seul sens.

3. Dispositif selon la revendication 1 ou 2, **caractérisé en ce que**, parmi les stalles consécutives (1 à 3) que doivent traverser les animaux, la stalle de traite (3) est la dernière.

4. Dispositif selon la revendication 3, **caractérisé en ce que** tout traitement d'un animal dans chacune des stalles (1, 2) par lesquelles l'animal doit passer en premier lieu est d'une durée plus courte que le traitement de cet animal dans la stalle de traite (3).

5. Dispositif selon l'une quelconque des revendications précédentes, **caractérisé en ce que** toutes les stalles (1 à 3) sont alignées en sens longitudinal.

6. Dispositif selon la revendication 5, **caractérisé en ce qu'**il comprend trois stalles (1 à 3) qui sont contiguës l'une à l'autre en sens longitudinal et peuvent être mises en communication entre elles au moyen de cloisons mobiles vers le haut (8, 9).

7. Dispositif selon la revendication 6, **caractérisé en ce que** l'entrée (10) de la stalle (1) par laquelle un animal doit passer en premier et la sortie (11) de la stalle (3)par laquelle un animal doit passer en dernier sont positionnées sur les côtés courts des stalles (1, 3), tandis que l'entrée (10) et la sortie (11) sont constituées par une cloison mobile vers le haut (12).

8. Dispositif selon l'une quelconque des revendications précédentes, **caractérisé en ce que** les mangeoires (15) sont attachées à une ou plusieurs cloisons mobiles vers le haut (8, 9) entre les stalles individuelles (1, 2 ; 2, 3) et/ou à la sortie (11) constituée par une cloison mobile vers le haut (12) de la stalle (3) par laquelle un animal doit passer en dernier.

9. Dispositif selon l'une quelconque des revendications 6 à 8, **caractérisé en ce que** sont présentes trois stalles (1 à 3) et trois mangeoires (15) attachées aux cloisons (8, 9) entre les stalles (1, 2 ; 2, 3) et à la sortie (11) de la stalle (3) par laquelle un animal doit passer en dernier.

10. Dispositif selon l'une quelconque des revendications 6 à 9, **caractérisé en ce que** la cloison (8, 9) entre les stalles (1, 2 ; 2, 3) et la cloison (12) constituant l'entrée (10) de la stalle (1) par laquelle un animal doit passer en premier, ont des moyens (16) attachés à elles pour faire mouvoir l'animal jusqu'à un position plus définie dans le sens longitudinal des stalles (1 à 3).

11. Dispositif selon l'une quelconque des revendications 6 à 10, **caractérisé en ce qu'**une cloison mobile vers le haut (8, 9, 12) est équipée d'une liaison à quatre barres (13) pour mouvoir au moins la mangeoire (15) correspondante vers le haut sans aucun changement appréciable de sa position.
